# EUROPÄISCHE PATENTSCHRIFT

(11) **EP 1 508 729 B1**
(45) Veröffentlichungstag und Bekanntmachung des Hinweises auf die Patenterteilung: **09.05.2007**
(21) Anmeldenummer: 04014788.6
(22) Anmeldetag: 24.06.2004
(51) Int. Cl.: F16J 3/04

(54) **Faltenbalg**
Bellows
Soufflet

(30) Priorität: 22.08.2003 DE 10339131
(43) Veröffentlichungstag der Anmeldung: 23.02.2005
(73) Patentinhaber: Carl Freudenberg KG, 69469 Weinheim (DE)
(72) Erfinder: Schirmer, Stefan, 33100 Paderborn (DE)

(56) Entgegenhaltungen:
- EP-A- 0 647 790
- EP-A- 0 940 595

## Beschreibung

### Technisches Gebiet

Die Erfindung betrifft einen Faltenbalg gemäß dem Oberbegriff des Patentanspruchs 1.

### Stand der Technik

Faltenbälge sind aus der EP 0 940 595 A1 bekannt. Sie bestehen im Wesentlichen aus einem rotationssymmetrischen Körper aus gummielastischem Werkstoff in dem in Längsrichtung mehrere Falten ausgeformt sind. Faltenbälge dienen beispielsweise der Abdichtung von homokinetischen Gelenken, z.B. der Abdichtung von Antriebswellen-Gelenken bei Kraftfahrzeugen.

Bei neueren Entwicklungen wird die Abschlussfalte als letzte Falte vor dem Anschlussbund aufgrund des beschränkten Bauraums nur noch halb ausgeführt und geht an der höchsten Stelle direkt in den Anschlussbund über, so dass die Abschlussfalte in radialer Richtung nicht über den Anschlussbund hinausragt. Dadurch ist die Flexibilität der letzten Falte eingeschränkt und bei großen Gelenkbeugungen wird der Faltenbalg an dieser Stelle stark beansprucht.

### Darstellung der Erfindung

Der Erfindung liegt die Aufgabe zugrunde, einen Faltenbalg der oben genannten Art derart weiterzuentwickeln, dass vorzeitiger Verschleiß im Bereich der Abschlussfalte oder dem Abschlussstück vermieden wird und der Faltenbalg auch bei großen Gelenkbeugungen eine lange Gebrauchsdauer hat.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe umfasst die Abschlussfalte zumindest eine sich in Längsrichtung erstreckende, rollbalgförmig ausgebildete Entlastungsfalte mit einem Faltental und zwei Faltenspitzen, die innerhalb der axialen Erstreckung der Abschlussfalte und/oder stirnseitig, auf der dem Anschlussstück zugeordneten Stirnseite der Abschlussfalte angeordnet sind.

Durch die Entlastungsfalte wird bei einer großen Auslenkung eines zu schützenden Achsgelenks die Flexibilität des Faltenbalgs erhöht, da die Entlastungsfalte eine zusätzliche Dehnung des Faltenbalgs ermöglicht. Dadurch werden die Spannungen, die auf die letzte Falte wirken, reduziert. Ein vorzeitiger Verschleiß im Bereich der Abschlussfalte und des Anschlussstückes wird vermieden.

In einer vorteilhaften Ausgestaltung kann das Faltental der Entlastungsfalte verrundet ausgeführt sein. Durch die Rundungen werden bei großen Beugungen auftretende Spannungsspitzen im Faltental der Entlastungsfalte abgebaut, die im Stand der Technik zum Reißen des Werkstoffs und damit zum vorzeitigen Verschleiß führen, vermieden.

In einer weiteren vorteilhaften Ausgestaltung können die Faltenspitzen der Entlastungsfalte abgerundet sein. Durch die Rundung werden bei großen Beugungen auftretende Spannungsspitzen in den Faltenspitzen der Entlastungsfalte abgebaut, die im Stand der Technik ebenfalls zum Reißen und vorzeitigem Verschleiß führen können. Durch eine Verrundung der Faltenspitzen wird die Gefahr eines Einknickens der Entlastungsfalte gesenkt, da eine Materialanhäufung in der Faltenspitze vermieden wird, wodurch bei einer Dehnung der Entlastungsfalte die Differenz der Dehnungswege auf der Innen- und Außenseite der Entlastungsfalte verringert wird.

Bevorzugt kann die radiale Tiefe der Entlastungsfalte zwischen Faltental und den axial beiderseits angrenzenden Faltenspitzen 1 bis 4 mm betragen. Diese Dimensionen sind auf die typische Wanddicke eines Faltenbalgs abgestimmt. welche meist etwa 1 mm beträgt. Entlastungsfalten mit einer Tiefe von 1 bis 4 mm nutzen den verfügbaren Bauraum aus und bieten ausreichenden Dehnungsspielraum.

In einer vorteilhaften Ausgestaltung können die Rundungsradien von Faltental und/oder Faltenspitzen 0,2 bis 2 mm betragen. Bei diesen Rundungsradien werden die Spannungsspitzen bei großen Gelenkbeugungen eines Achsgelenks abgebaut, bei gleichzeitig ausreichendem nutzbaren Dehnungsweg.

### Kurzbeschreibung der Zeichnung

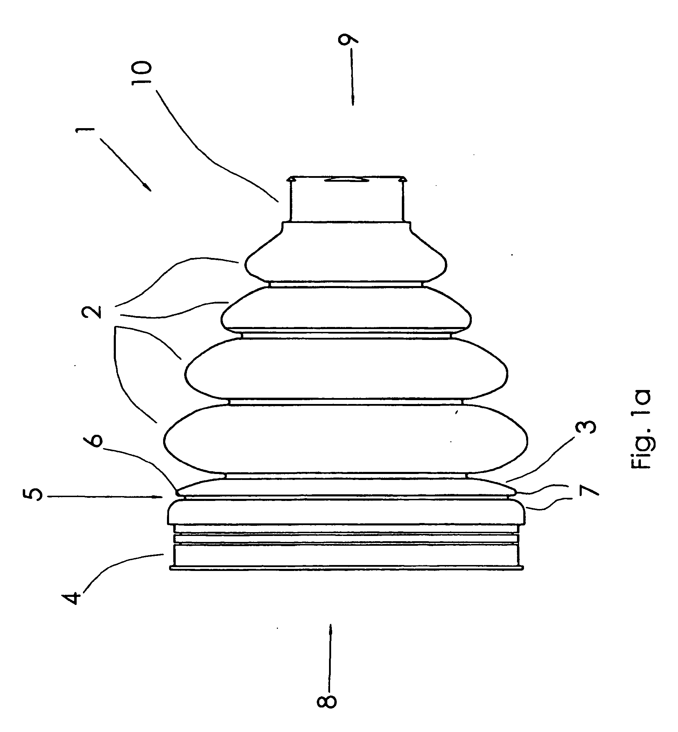

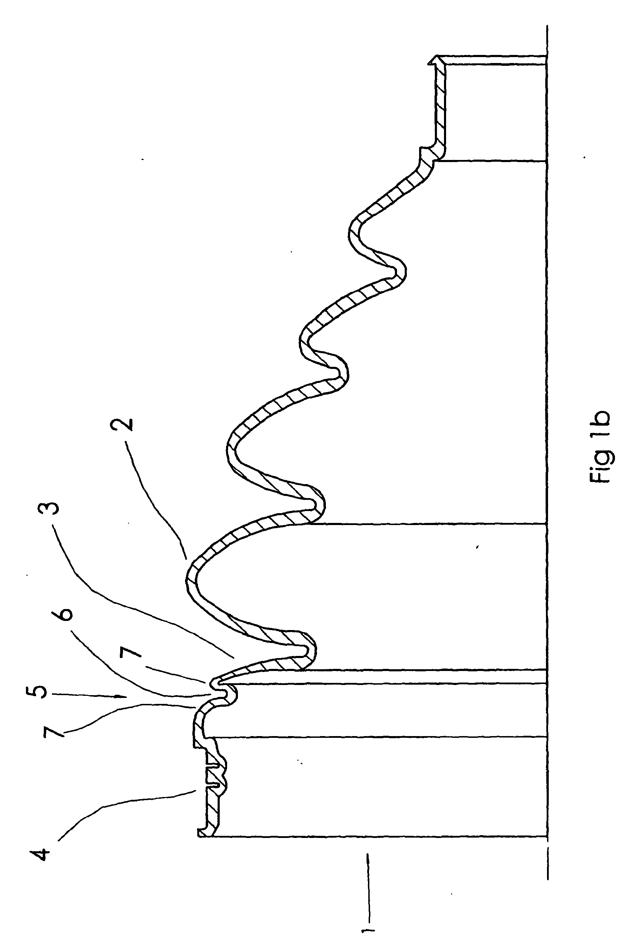

Einige Ausführungsbeispiele des erfindungsgemäßen Faltenbalges werden nachfolgend anhand der Figuren 1 bis 5 näher erläutert. Diese zeigen, jeweils in schematischer Darstellung:
- Fig. 1: einen Faltenbalg mit einer Entlastungsfalte, die innerhalb der Abschlussfalte angeordnet ist, wobei der Faltenbalg in
- Fig. 1a: als Ansicht und in
- Fig. 1 b: als Längsschnitt dargstellt ist;
- Fig. 2: einen Faltenbalg mit Entlastungsfalten, die zwischen Abschlussfalte und Anschlussstück angeordnet sind;
- Fig. 3: einen Faltenbalg mit einer Entlastungsfalte, die zwischen Abschlussfalte und Anschlussstück angeordnet ist;
- Fig. 4: einen Faltenbalg mit einer Entlastungsfalte, die zwischen Abschlussfalte und Anschlussstück angeordnet ist und deren Faltenspitzen verrundet ausgeführt sind;
- Fig. 5: einen Faltenbalg mit einer Entlastungsfalte, die zwischen Abschlussfalte und Anschlussstück angeordnet ist und deren Faltenspitzen halbrund ausgeführt sind.

### Ausführung der Erfindung

Die Figuren 1 bis 5 unterscheiden sich jeweils nur in der Form und der Anordnung der Entlastungsfalten.

Figur 1 zeigt einen kegelförmig ausgebildeten Faltenbalg 1 zum Schutz eines homokinetischen Gelenks eines Kraftfahrzeugs, umfassend vier Falten 2 und auf einer Stirnseite 8 des Faltenbalgs 1 eine halb ausgeführte Abschlussfalte 3. Die Falten 2, 3 ermöglichen eine Längenänderung des Faltenbalgs 1 in axialer Richtung sowie eine kardanische Auslenkbewegung. Die Abschlussfalte 3 ist auf ihrer der Falte 2 axial abgewandten Seite mit einem Abschlussstück 4 zur Befestigung des Faltenbalgs 1 mit einem (nicht dargestellten) Maschinenelement verbunden. Auf der anderen Stirnseite 9 befindet sich ein zweites Anschlussstück 10, ebenfalls zur Befestigung des Faltenbalgs 1 an einem Maschinenelement, welches mit einer Falte 2 verbunden ist. Der Faltenbalg 1 ist materialeinheitlich und einstückig ausgeführt und aus gummielastischen Material im Blasverfahren hergestellt. Die Wanddicke des Faltenbalgs 1 beträgt in diesem Ausführungsbeispiel 1 bis 2 mm.

In die Abschlussfalte 3 ist eine rollbalgförmig ausgebildete Entlastungsfalte 5 integriert, wobei die radiale Tiefe der Entlastungsfalte von Faltenspitze 7 zu Faltental 6 vier mm beträgt. Die Faltenspitzen 7 der Entlastungsfalte 5 sind verrundet ausgeführt, um bei großen Beugungen auftretende Spannungsspitzen abzubauen. Die Entlastungsfalte 5 ermöglicht bei größeren Beugungen des Faltenbalgs 1 einen größeren Dehnungsweg der Abschlussfalte 3.

In Figur 1 a ist der Faltenbalg als Ansicht dargestellt. Figur 1b zeigt den Faltenbalg aus Figur 1 a im Längsschnitt.

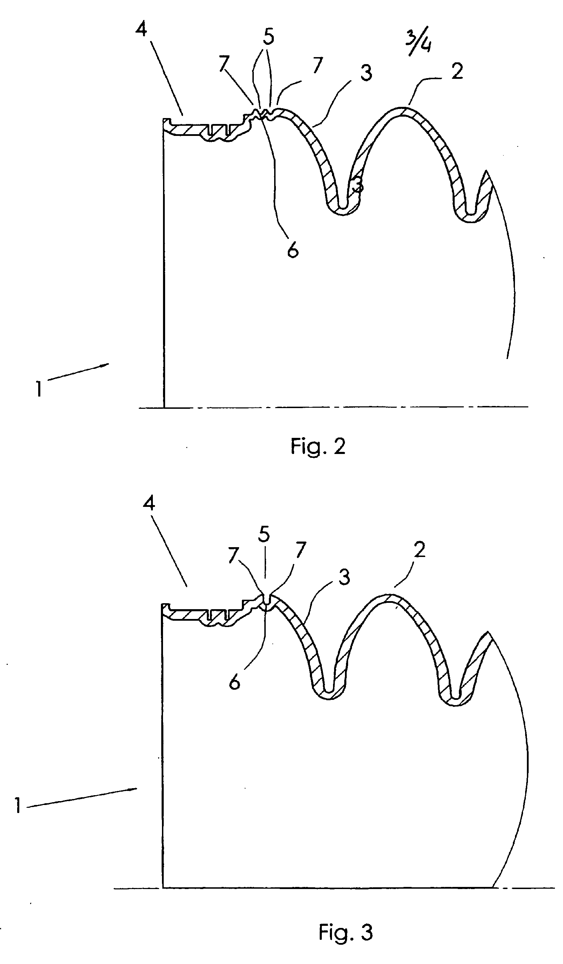

Die Entlastungsfalten 5 sind in dem Ausführungsbeispiel aus Figur 2 zwischen der Abschlussfalte 3 und dem Abschlussstück 4 angeordnet. Da die radiale Tiefe der Entlastungsfalten 5 aufgrund des dort eingeschränkten Bauraums klein ist, sind zwei Entlastungsfalten 5 ausgeführt, um trotz der geringen Tiefe der Entlastungsfalten 5 einen möglichst großen Dehnungsweg zu erzielen. Die Faltenspitzen 7 der Entlastungsfalten 5 sind in radialer Richtung nicht höher als die Abschlussfalte 3 ausgeführt.

In den Figuren 3 bis 5 ist ein Faltenbalg 1 gezeigt, wobei jeweils nur eine Entlastungsfalte 5 ausgebildet ist. Die Tiefe der Entlastungsfalte 5 von Faltenspitze 7 zu Faltental 6 ist ausreichend groß, um bei großen Beugungen des Faltenbalgs 1 eine ausreichende Dehnung zu ermöglichen.

In Figur 3 ist ein Faltenbalg 1 gezeigt, bei dem die Entlastungsfalte 5 zwischen Abschlussfalte 3 und Abschlussstück 4 angeordnet ist. Die Tiefe der Entlastungsfalte 5 ist in diesem Ausführungsbeispiel größer als die Entlastungsfalte nach Figur 2. Die Faltenspitzen 7 sind nicht verrundet ausgeführt, was die Fertigung des Werkzeugs für den Faltenbalg 1 vereinfacht.

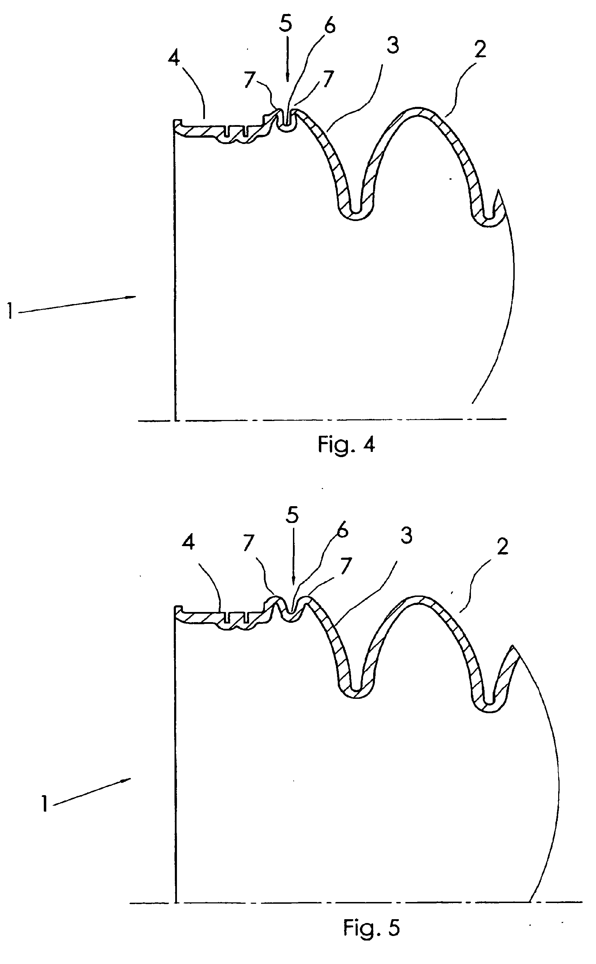

Die Entlastungsfalte 5 des Ausführungsbeispiels aus Figur 4 ist zwischen Abschlussfalte 3 und Abschlussstück 4 abgeordnet. Die Tiefe der Entlastungsfalte 5 ist in diesem Ausführungsbeispiel größer als die Entlastungsfalte nach Figur 2. Die Faltenspitzen 7 sind verrundet ausgeführt, wodurch bei großen Dehnungen auftretende Spannungsspitzen abgebaut werden.

Figur 5 zeigt einen Faltenbalg 1 mit einer Entlastungsfälte 5, die zwischen Abschlussfalte 3 und Abschlussstück 4 abgeordnet ist. Die Tiefe der Entlastungsfalte 5 ist in diesem Ausführungsbeispiel größer als die Entlastungsfalte nach Figur 2. Die Faltenspitzen 7 sind halbkreisförmig ausgeführt, dadurch werden bei großen Dehnungen auftretende Spannungsspitzen abgebaut und die Gefahr des Einknickens der Entlastungsfalte 5 bei großen Dehnungen verringert und dadurch die Gebrauchsdauer erhöht.

## Patentansprüche

1. Faltenbalg (1) aus einem gummielastischen Werkstoff, der materialeinheitlich und einstückig ausgebildet ist, umfassend zumindest eine sich in Längsrichtung des Faltenbalgs erstreckende Falte (2), die zumindest stirnseitig einerseits eine nur teilweise, im wesentlichen als halbe Falte ausgebildete Abschlussfalte (3) aufweist, wobei die Abschlussfalte (3) auf ihrer der Falte (2) axial abgewandten Seite mit einem Abschlussstück (4) zur Befestigung des Faltenbalgs (1) verbunden ist, **dadurch gekennzeichnet, dass** die Abschlussfalte (3) zumindest eine sich in Längsrichtung erstreckende, rollbalgförmig ausgebildete Entlastungsfalte (5) mit einem Faltental (6) und zwei Faltenspitzen (7) umfasst, die innerhalb der axialen Erstreckung der Abschlussfalte (3) und/oder stirnseitig, auf der dem Abschlussstück (4) zugeordneten Stirnseite der Abschlussfalte (3) angeordnet sind.

2. Faltenbalg nach Anspruch 1, **dadurch gekennzeichnet, dass** das Faltental (6) der Entlastungsfalte (5) verrundet ausgeführt ist.

3. Faltenbalg nach Anspruch 1 oder 2, **dadurch gekennzeichnet, dass** die Faltenspitzen (7) der Entlastungsfalte (5) abgerundet sind.

4. Faltenbalg nach Anspruch 2 oder 3, **dadurch gekennzeichnet, dass** die Rundungsradien von Faltental (6) und/oder Faltenspitzen (7) 0,2 bis 2 mm betragen.

5. Faltenbalg nach einem der Ansprüche 1 bis 4, **dadurch gekennzeichnet, dass** die radiale Tiefe der Entlastungsfalte (5) zwischen Faltental (6) und den axial beiderseits angrenzenden Faltenspitzen (7) 1 bis 4 mm beträgt.

## Claims

1. Bellows (1) of a rubber-elastic material, which is formed from the same material throughout and in one piece, comprising at least one fold (2), which extends in the longitudinal direction of the bellows and has at least on one end face a terminating fold (3) which is only partial formed, essentially as half a fold, the terminating fold (3) being connected on its side facing axially away from the fold (2) to a terminating piece (4) for fastening the bellows (1), **characterized in that** the terminating fold (3) comprises at least one relief fold (5), which extends in the longitudinal direction, is formed as a rolling lobe and has one fold trough (6) and two fold peaks (7), which are arranged within the axial extent of the terminating fold (3) and/or at the end, on the end face of the terminating fold (3) that is assigned to the terminating piece (4).

2. Bellows according to Claim 1, **characterized in that** the fold trough (6) of the relief fold (5) is made in a rounded fashion.

3. Bellows according to Claim 1 or 2, **characterized in that** the fold peaks (7) of the relief fold (5) are rounded off.

4. Bellows according to Claim 2 or 3, **characterized in that** the rounding radii of the fold trough (6) and/or the fold peaks (7) are 0.2 to 2 mm.

5. Bellows according to one of Claims 1 to 4, **characterized in that** the radial depth of the relief fold (5) between the fold trough (6) and the fold peaks (7) that are axially adjacent on both sides is 1 to 4 mm.

## Revendications

1. Soufflet (1) en une matière de gomme élastique, qui est fabriqué en une seule matière et en une seule pièce, comprenant au moins un pli (2) s'étendant dans la direction longitudinale du soufflet, qui présente au moins du côté frontal d'une part un pli terminal (3) formé par un pli seulement partiel, essentiellement par un demi-pli, dans lequel le pli terminal (3) est assemblé, sur son côté situé axialement à l'opposé du pli (2), à une pièce terminale (4) pour la fixation du soufflet (1), **caractérisé en ce que** le pli terminal (3) comporte au moins un pli de déchargement (5) réalisé en forme de soufflet roulant et s'étendant en direction longitudinale, et comprenant une vallée de pli (6) et deux crêtes de pli (7), qui sont disposées à l'intérieur de l'extension axiale du pli terminal (3) et/ou du côté frontal, sur le côté frontal du pli terminal (3) associé à la pièce terminale (4).

2. Soufflet selon la revendication 1, **caractérisé en ce que** la vallée de pli (6) du pli de déchargement (5) est arrondie.

3. Soufflet selon la revendication 1 ou 2, **caractérisé en ce que** les crêtes de pli (7) du pli de déchargement (5) sont arrondies.

4. Soufflet selon la revendication 2 ou 3, **caractérisé en ce que** les rayons de courbure de la vallée de pli (6) et/ou des crêtes de pli (7) valent de 0,2 à 2 mm.

5. Soufflet selon l'une quelconque des revendications 1 à 4, **caractérisé en ce que** la profondeur radiale du pli de déchargement (5) entre la vallée de pli (6) et les crêtes de pli (7) axialement adjacentes de part et d'autre vaut de 1 à 4 mm.
